# EUROPEAN PATENT APPLICATION

(11) **EP 4 378 616 A1**
(43) Date of publication of application: **05.06.2024**
(21) Application number: 22020588.4
(22) Date of filing: 01.12.2022
(51) Int. Cl.: B23K 9/16, B23K 9/29, B23K 26/14

(54) **SEGMENTED SHIELDING GAS TRAILING NOZZLE**

(71) Applicant: Linde GmbH, 82049 Pullach (DE)
(72) Inventor: SIEWET, Erwan, 82049 Pullach (DE); FEHRENBACH, Lukas, 82049 Pullach (DE); PFREUNTNER, Michael, 82049 Pullach (DE); WAGNER, Richard Andreas, 82049 Pullach (DE)
(74) Representative: Lu, Jing

(57) **Abstract**

The present invention relates to a trailing nozzle device (1) for a welding torch (2) for covering a weld pool with a shielding gas, wherein the trailing nozzle device (1) comprises a trailing nozzle body (3) being configured to be mounted to the welding torch (2), wherein a shielding gas is ejectable onto a weld pool generated by the welding torch (2) via the trailing nozzle body (3), wherein the trailing nozzle body (3) comprises multiple segments (31, 32, 33, 34) extending side by side along an end section (2a) of the welding torch (2) in a circumferential direction of the trailing nozzle body (30) when the trailing nozzle body (3) is mounted to the welding torch (2), and wherein the trailing nozzle device (1) is designed to feed the segments (31, 32, 33, 34) with a shielding gas so that a flow rate of the shielding gas ejected through the respective segment (31, 32, 33, 34) can be controlled for each segment (31, 32, 33, 34) individually.

## Description

The present invention relates to trailing nozzle device and a welding and WAAM method using such a device.

During welding, the molten weld pool must be protected against atmospheric gases, otherwise unwanted chemical reactions may occur. Also, after solidification of the melt, protection especially from atmospheric oxygen is advantageous to reduce or avoid oxidation of the surface. For this purpose, the use of shielding gas trailing nozzles, especially in plasma and TIG welding, is state of the art. These trailing nozzles are attached to one side of the welding torch and protect the area behind the welding torch in the opposite direction to the welding direction. This is sufficient because the welding torch is usually only moved in one direction during welding.

In generative welding (also called additive manufacturing, 3D printing, DED-Arc or WAAM), however, the welding direction is often changed or reversed. A simple example is the creation of a wall. Here there is a turning point at each end.

In the case of additive manufacturing, the heat introduced by the welding process accumulates due to the recurring layer structure and the poor heat dissipation. This results in larger weld pools or areas of hot surfaces. In addition, the welding direction is frequently changed or even reversed. This makes optimum gas protection particularly important. Conventional trailing gas nozzles are no longer sufficient, especially if they are located on the wrong, i.e. already cooled, side when the direction is reversed.

Consequently, the trailing gas nozzles would have to be rotated around the welding torch or the torch itself with the trail needs to be rotated, and the trailing nozzle adjustment process will inevitably lead to situations where hot surfaces are exposed to reaction with atmospheric gases. Therefore, it is often necessary to work in an inert chamber. This has the disadvantage of very long purge times, extremely high gas consumption, and difficult accessibility.

Alternatively, round trailing nozzles could be used, which provide rotationally symmetrical protection around the welding torch. However, these nozzles have the disadvantage of very high gas consumption or poor gas utilization, since the gas also flows onto areas that do not require protection.

Based on the above, the problem to be solved by the present invention is to provide a trailing nozzle device and a corresponding welding method that is improved regarding the above stated difficulties.

This problem is solved by a trailing nozzle device having the features of claim 1 and a method having the features of claim 14. Preferred embodiments of these aspects of the present invention are stated in the corresponding dependent claims and are described below.

According to claim 1, a trailing nozzle device for a welding torch for covering a weld pool with a shielding gas is disclosed, wherein the trailing nozzle device comprises a trailing nozzle body being configured to be mounted to a welding torch, wherein a shielding gas is ejectable onto a weld pool generated by the welding torch via the trailing nozzle body, and wherein the trailing nozzle body comprises multiple segments extending side by side along an end section of the welding torch in a circumferential direction of the trailing nozzle body (e.g. around said end section) when the trailing nozzle body is mounted to the welding torch, and wherein the trailing nozzle device is designed to feed the segments with a shielding gas so that a flow rate of the shielding gas ejected through the respective segment can be controlled for each segment individually.

Particularly, due to the segmented trailing nozzle body individual segments of the trailing nozzle body can be controlled in a targeted manner, so that gas consumption can be significantly reduced, or the effective diameter of the trailing nozzle body can be increased with identical consumption. The segments are preferably controlled by means of valves. Particularly, shielding gas can be supplied to the segments in such a way that only hot surfaces of the workpiece to be welded are exposed to the shielding gas.

According to a preferred embodiment of the trailing nozzle device, the segments extend together around the end section of the welding torch in the circumferential direction, when the trailing nozzle body is mounted to the welding torch.

According to a further embodiment of the trailing nozzle device, the segments are separated from one another by walls of the trailing nozzle body, each wall extending along a radial direction of the trailing nozzle body.

Furthermore, in a preferred embodiment of the trailing nozzle device, each segment comprises a discharge opening through which the shielding gas is ejectable onto a weld pool or a hot surface region of the workpiece, wherein the discharge openings together define an annular discharge area that extends around said end section of the welding torch when the trailing nozzle body is mounted to the welding torch. Particularly, the discharge area can be discontinued due to the walls.

According to yet another embodiment of the trailing nozzle device, the latter preferably comprises multiple valves, each valve allowing to adjust a flow rate of the shielding gas ejected or ejectable through one of the segments.

Furthermore, according to an embodiment of the trailing nozzle device, each segment comprises a gas distributor for distributing the shielding gas to be ejected into the respective segment, wherein particularly the respective distributor is in flow connection with the valve associated with the segment to which the distributor belongs. Preferably, according to an embodiment, the respective gas distributor comprises a porous material such as sintered bronze through which the shielding gas is passed.

Further, according to an embodiment of the trailing nozzle device, the ratio of damper size (i.e. surface area) to segment size is preferably fixed.

According to a further embodiment of the trailing nozzle device according to the present invention, the trailing nozzle device is configured to cool the trailing nozzle body by means of a circulating cooling agent fluid.

Furthermore, in a preferred embodiment, the trailing nozzle device comprises a gas-permeable cover element for covering said discharge openings, wherein particularly the gas-permeable cover element is a perforated plate or a metal mesh which particularly forms a bottom of the trailing nozzle body that faces the weld pool / workpiece upon welding. The cover element can have a circular contour. Furthermore, according to a preferred embodiment, the perforated plate is releasably connected to the trailing nozzle body, particularly such that it is replaceable. In particular, the perforated plate is configured to be connected to the trailing nozzle body by means of a snap ring in an embodiment in order to ease replacement.

According to yet a further embodiment of the trailing nozzle device, the trailing nozzle device is configured to control the valves based on a surface temperature of a workpiece being welded, so that the shielding gas is merely ejected onto the melt pool and/or still hot surfaces regions of the workpiece.

Particularly, according to a preferred embodiment, said surface temperature is determined by an estimation based on a planned welding path (e.g. the course of a planned weld seam to be welded with the welding torch) or based on a thermal field simulation.

Furthermore, in a preferred embodiment of the trailing nozzle device, the temperature of the workpiece is measured by means of at least one temperature sensor comprised by the trailing nozzle device. According to a preferred embodiment, the at least one temperature sensor is arranged on the trailing nozzle body, particularly on a bottom of the trailing nozzle body configured to face the workpiece being welded.

Generally, the trailing nozzle device can be used with different welding methods, particularly gas metal arc welding (GMAW), tungsten inert gas welding (TIG) or plasma welding. Thus, all suitable welding methods can be used in the method according to the present invention (see also below).

According to a further embodiment of the trailing nozzle device according to the present invention, the respective segment of the trailing nozzle body is divided into subsegments in a radial direction of the trailing nozzle body, wherein the trailing nozzle device is designed to feed the subsegments with a shielding gas so that a flow rate of the shielding gas ejected through the respective subsegment can be controlled for each subsegment individually. Particularly, according to an embodiment, each subsegment comprises a discharge opening in turn, through which the shielding gas is ejectable onto a weld pool or hot surface region of the workpiece, wherein the discharge openings together define said annular discharge area that extends around said end section of the welding torch when the trailing nozzle body is mounted to the welding torch. Particularly, the discharge area can be discontinued due to the walls separating the segments in the circumferential direction and/or separating the subsegments from one another in the respective radial direction.

Furthermore, in an embodiment of the invention, the trailing nozzle device comprises multiple valves, each valve allowing to adjust a flow rate, particularly mass flow rate, of the shielding gas ejected through one of the subsegments. Further, each subsegment comprises a gas distributor for distributing the shielding gas to be ejected into the respective subsegment, wherein particularly the respective distributor is in flow connection with the valve associated with the subsegment to which the distributor belongs.

Further, in a preferred embodiment, the trailing nozzle device comprises at least one first subsegment adjacent the welding torch and at least one second subsegment further remote from the welding torch in the radial direction of the trailing nozzle body, and wherein the trailing gas nozzle device is configured to feed the at least one first subsegment with the shielding gas when the workpiece is still below a pre-defined threshold temperature and/or a length of a weld seam to be welded is below a pre-defined threshold length, and/or wherein the trailing gas nozzle device is configured to also feed the at least one second subsegment with the shielding gas in addition, when the workpiece is above a pre-defined threshold temperature and/or a length of a weld seam to be welded is above a pre-defined threshold length.

Furthermore, according to yet another embodiment, the trailing nozzle device is configured to feed several segments and/or subsegments being arranged side by side in the circumferential direction, e.g. to allow welding relatively wide weld seams, e.g. by oscillating the welding torch back and forth perpendicular to the weld seam direction upon welding.

Furthermore, according to yet another embodiment, the trailing nozzle device is configured to feed segments and/or subsegments on opposite sides of the welding torch upon stopping and moving the welding torch in the opposite direction, e.g. to perform a further pass along a weld seam.

Furthermore, according to yet another embodiment, the trailing nozzle device is configured to, when welding a weld seam with the welding torch in a welding direction, to feed shielding gas to a segment and/or subsegment in front of the welding torch before an end point or turning point (i.e. where the welding direction is reversed) of the weld seam is reached.

According to a further embodiment, the trailing nozzle device comprises a feed line for providing the shielding gas and a mass flow controller for controlling flow of the shielding gas through the feed line and the respective valve. Preferably, the controller is configured to calculate and adjust the flow rate of the shielding gas based on a number of active gas manifolds connected to the mass flow controller. Alternatively, the flow rate of each gas manifold can be individually controlled by a flow controller.

Furthermore, according to an embodiment, the mass flow controller is configured to adjust valves or proportional valves to control the flow rate with which the shielding gas is fed into the respective segment and/or subsegment of the trailing nozzle body.

According to yet another embodiment, the trailing nozzle device is configured to pressurize also segments and/or subsegments with the shielding gas that are currently not being used for protecting the weld pool so as to prevent atmospheric gases from entering said segments and/or subsegments not being used.

Furthermore, according to an embodiment of the trailing nozzle device is configured to pressurize all segments and/or subsegments at start-up with the shielding gas so as to purge all segments and/or subsegments of the trailing nozzle body.

Furthermore, according to a preferred embodiment, the trailing nozzle device is configured to provide a flow rate of the shielding gas per used distributor in the range from 5 l/min to 20 I/min, preferably in the range from 10 l/min to 15 l/min.

Further, according to a preferred embodiment, the shielding gas is selected from the list containing: Argon; nitrogen; a mixture containing argon and one or several of helium, oxygen, carbon dioxide, hydrogen; a mixture containing nitrogen and one or several of helium, oxygen, carbon dioxide, hydrogen.

According to yet another aspect of the present invention, a welding method using a trailing nozzle device according to the present invention is disclosed, the method comprising at least the steps of: welding a weld seam and protecting the weld seam by ejecting a shielding gas onto a weld pool via the trailing nozzle body.

According to a preferred embodiment of the method, the flow rate of the shielding gas ejected through the respective segment is controlled for each segment individually.

According to yet a further preferred embodiment of the method, the valves are controlled based on a surface temperature of a workpiece being welded, so that the shielding gas is merely ejected onto the melt pool and/or still hot surfaces regions of a work piece being welded.

Particularly, according to a preferred embodiment of the method, said surface temperature is determined by an estimation based on a planned welding path (e.g. the course of a planned weld seam to be welded with the welding torch) or based on a thermal field simulation.

Furthermore, in a preferred embodiment of the method, the temperature of the workpiece is measured by means of at least one temperature sensor comprised by the trailing nozzle device. According to a preferred embodiment of the method, the at least one temperature sensor is arranged on the trailing nozzle body, particularly on a bottom of the trailing nozzle body configured to face the work piece being welded.

Further, according to an embodiment of the method, the workpiece is welded using additive manufacturing, e.g. such as 3D printing, DED-Arc or WAAM. Particularly welding the workpiece is done using one of: gas metal arc welding (GMAW), tungsten inert gas welding (TIG), plasma welding, laser welding, PTA.

According to a further embodiment of the method according to the present invention, the segments are subdivided into subsegments in a radial direction of the trailing nozzle body, wherein a flow rate of the shielding gas ejected through the respective subsegment is controlled for each subsegment individually.

Further, in a preferred embodiment of the method, the trailing nozzle device comprises at least one first subsegment adjacent the welding torch and at least one second subsegment further remote from the welding torch in the radial direction of the trailing nozzle body, and wherein the at least one first subsegment is fed with the shielding gas when the workpiece is still below a pre-defined threshold temperature and/or a length of a weld seam to be welded is below a pre-defined threshold length, and/or wherein also the at least one second subsegment is fed with the shielding gas in addition, when the workpiece is above a pre-defined threshold temperature and/or a length of a weld seam to be welded is above a pre-defined threshold length.

Furthermore, according to yet another embodiment of the method, several segments and/or subsegments being arranged side by side in the circumferential direction are fed with shielding gas at the same time, wherein particularly the welding torch is oscillated back and forth upon welding to widen the weld seam.

Furthermore, according to yet another embodiment of the method, segments and/or subsegments on opposite sides of the welding torch are fed with shielding gas upon stopping and moving the welding torch in the opposite direction, e.g. to perform a further pass along a weld seam.

Furthermore, according to yet another embodiment of the method, when welding a weld seam with the welding torch in a welding direction, shielding gas is fed to a segment and/or subsegment in front of the welding torch before reaching an end point or turning point (i.e. where the welding direction is reversed) of the weld seam.

According to a further embodiment of the method, the flow rate of the shielding gas through the respective segment and/or subsegment is controlled with a mass flow controller (MFC), wherein particularly the MFC calculates and adjusts the flow rate of the shielding gas based on a number of active gas manifolds connected to the mass flow controller. Alternatively, the flow rate of each gas manifold can be individually controlled by a flow controller.

According to yet another embodiment of the method, also segments and/or subsegments are pressurized with the shielding gas that are currently not being used for protecting the weld pool so as to prevent atmospheric gases from entering said segments and/or subsegments not being used.

Furthermore, according to an embodiment of the method, all segments and/or subsegments are fed at start-up with the shielding gas so as to purge all segments and/or subsegments before starting the actual welding process.

Furthermore, according to a preferred embodiment of the method, a flow rate in the range from 5 I/min to 20 l/min, preferably in the range from 10 l/min to 15 I/min is provided per gas distributor in the respective segment and/or subsegment being used.

Further, according to a preferred embodiment of the method, the shielding gas is selected from the list containing: Argon; nitrogen; a mixture containing argon and one or several of helium, oxygen, carbon dioxide, hydrogen; a mixture containing nitrogen and one or several of helium, oxygen, carbon dioxide, hydrogen.

Furthermore, each feature of the present invention described in conjunction with the trailing nozzle device according to the present invention can also be applied in the method according to the present invention so as to further specify the method. Likewise, each feature described in conjunction with the method can be used to further specify the device according to the present invention either structurally of functionally.

In the following further embodiments and features of the present invention shall be described with reference to the Figures, wherein:
- Fig. 1: shows a perspective view an embodiment of a trailing nozzle device comprising a trailing nozzle body having segments for ejecting a shielding gas,
- Fig. 2: shows a schematic illustration use of a trailing nozzle device according to the present invention for protecting a weld seam with a shielding gas ejected by the trailing nozzle device;
- Fig. 3: shows a schematic illustration of an embodiment of a trailing device according to the present invention, wherein the segments of the trailing nozzle are divided into separately controllable subsegments use of a trailing nozzle device according to the present invention for protecting a weld seam with a shielding gas ejected by the trailing nozzle device;
- Fig. 4: shows a schematic illustration of an embodiment of a trailing device according to the present invention, wherein the trailing nozzle body of the device is divided in segments arranged side by side in a circumferential direction of the trailing nozzle body; and
- Fig. 5: shows a schematic illustration of an embodiment of a trailing device according to the present invention, wherein the individual segments (or subsegments) are fed with a shielding gas via valves that are controlled by a mass flow controller.

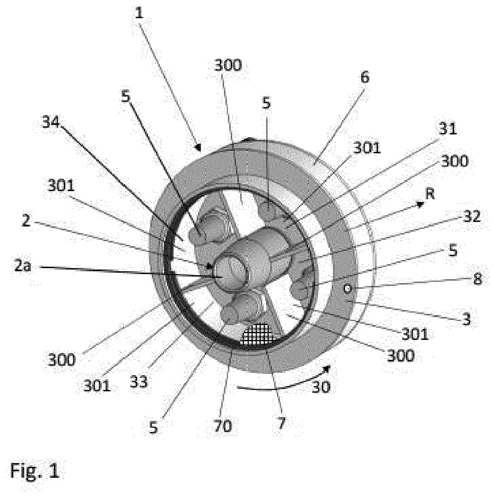

Fig. 1 shows an embodiment of a trailing nozzle device 1 for a welding torch 2 for protecting a weld pool with a shielding gas, wherein the trailing nozzle device 1 comprises a trailing nozzle body 3 being configured to be mounted to the welding torch 2, wherein a shielding gas is ejectable onto a weld pool generated by the welding torch 2 via the trailing nozzle body 3, wherein the trailing nozzle body 3 comprises multiple segments 31, 32, 33, 34 extending side by side along an end section 2a of the welding torch 2 in a circumferential direction of the trailing nozzle body 30 around said end section 2a when the trailing nozzle body 3 is mounted to the welding torch 2.

Particularly, the segments 31, 32, 33, 34 can be formed similar to circular sectors, here having a central angle of about 45°, wherein however a central portion of the nozzle trailing body 3 forms a receptacle for receiving the end section 2a of the welding torch.

At the end section an electrode of the welding torch can form an arc between the electrode and a workpiece.

The trailing nozzle device 1 is adapted to feed the segments 31, 32, 33, 34 with a shielding gas so that a flow rate of the shielding gas ejected through the respective segment 31, 32, 33, 34 can be controlled for each segment 31, 32, 33, 34 separately, i.e. independently from the other segments.

As shown in Fig. 1, the segments taken together 31, 32, 33, 34 extend around the end section 2a of the welding torch 2 in the circumferential direction 30, wherein the segments 31, 32, 33, 34 are separated from one another by walls 300 of the trailing nozzle body 3 that extend along a radial direction R of the trailing nozzle body 3, respectively.

Further, each segment 31, 32, 33, 34 is open towards a bottom side of the trailing nozzle body 3 and thereby forms a discharge opening 301, through which the shielding gas is ejectable onto the weld pool or a hot surface region of the workpiece. Due to the shape and arrangement of the segments 31, 32, 33, 34, the discharge openings 301 together preferably define an annular discharge area that extends around said end section 2a of the welding torch 2.

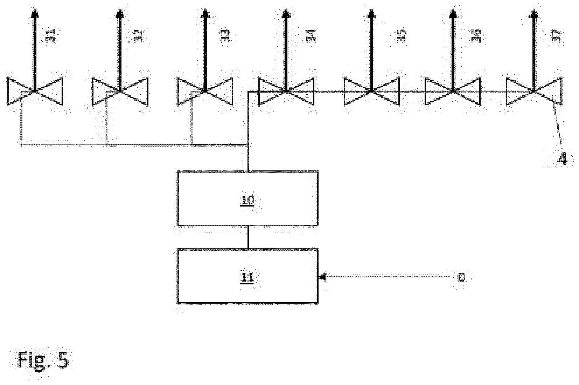

According to a preferred embodiment, the trailing nozzle device 1 comprises multiple valves 4, each valve allowing to adjust the flow rate of the shielding gas ejected through one of the segments 31, 32, 33, 34. According to the embodiment shown in Fig. 5, the valves 4 can be controlled by a mass flow controller (MFC) 10 that can be arranged in a main supply gas feed line providing the shielding gas (note that the embodiment of Fig. 5 shows seven segments as example, however less or more segments could be used). Preferably, the mass flow controller 10 can calculate the flow rate and adjust it based on the number of active gas manifolds (see Fig. 5). Alternatively, the gas flow of each gas manifold can be individually controlled by a flow controller, respectively. Further, the flow can be controlled by valves 4 or proportional valves 4. Further, segments that are not required are constantly pressurized with a very low gas flow so that no atmospheric gases can enter. The mass flow provider can employ data D such as temperature, planned welding path, temperature field simulation, etc., which data D may be provided by a separate unit 11 to the MFC 10.

Furthermore, as shown in Fig. 1, each segment 31, 32, 33, 34 preferably comprises its own gas distributor 5 for distributing the shielding gas to be ejected into the respective segment 31, 32, 33, 34. The gas distributors 5 can be made of a porous material such as sintered bronze.

Preferably, as indicated in Fig. 1, the trailing nozzle device 1 can comprises a gas-permeable cover element 7 for covering the discharge openings 301, wherein the gas-permeable cover element 7 is a perforated plate or a metal mesh. The cover element 7 can be releasably connected to the trailing nozzle body 3 and maybe secured to the body 3 by means of a snap ring engaging with a corresponding groove 70 of the body 3 (note that only a small portion of the cover element 7 is shown in Fig. 1 so that the components underneath it, such as the distributors 5 and walls 300 are visible. Due to the releasable connection, the cover element 7 can be easily replaced.

Furthermore, in order to be able to cool the trailing nozzle body 3 that is heated due to the welding process, the trailing nozzle device 1 comprises at least one conduit 6 through which a cooling agent fluid can be passed, particularly circulated. Furthermore, according to an embodiment, the trailing nozzle device 1 can be adapted to control the (e.g. proportional) valves 4 based on a surface temperature of the work piece being welded, so that the shielding gas is merely ejected onto the melt pool and/or still hot surfaces regions of a work piece being welded. For this, the device 1 can comprise at least one temperature sensor 8 that can be arranged on the trailing nozzle body 3. Particularly, the control of the valves 4 can take place on the basis of the surface temperature of the workpiece which is determined by one of: a path planning, a thermal field simulation, or is determined on the basis of current temperature information, so that the shielding gas only flows onto the melt pool and the still hot surfaces. The temperature sensor(s) can be located on the bottom side of the trailing nozzle body 3.

At start-up, when the welding procedure starts, all segments 31, 32, ... are preferably briefly pressurized with the standard flow rate in order to purge the respective segment. Preferably, the flow rate per gas distributor 5 is between 5 I/min and 20 l/min, particularly preferably between 10 I/min and 15 l/min. Particularly, as shielding gas, argon, nitrogen and their mixtures with helium, oxygen, carbon dioxide and hydrogen can be used.

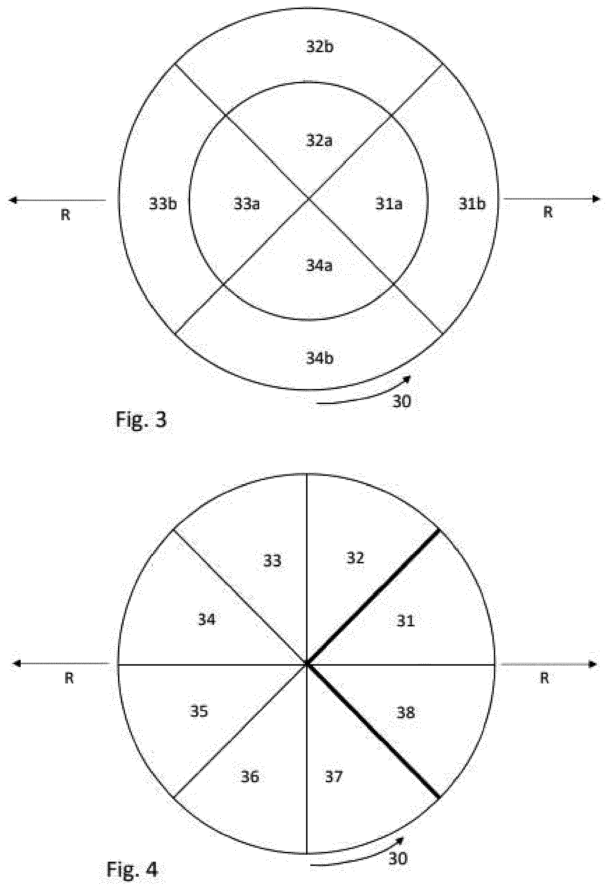

Furthermore, as indicated in Fig. 3, the segments 31, 32, 33, 34 can be radially divided into sub-segments 31a, 31b, 32a, 32b, 33a, 33b, 34a, 34b so that not only the angle but also the length of the gas shield can be adjusted. At the start, when the workpiece to be welded is still relatively cold, or when only short distances are welded, only the segment close to the torch is used (e.g. subsegment 31a). If the temperature field increases, e.g. for longer seams, or if the temperature of the structure increases, additional segments are switched on in the radial direction R (e.g. here section 31b for example).

If wide seams or workpieces are created, e.g. by oscillating the torch 2, shielding gas can also be applied to several segments lying next to each other as is indicated in Fig. 4, where both segments 31 and 38 receive shielding gas to discharge it onto the workpiece/ wide seam.

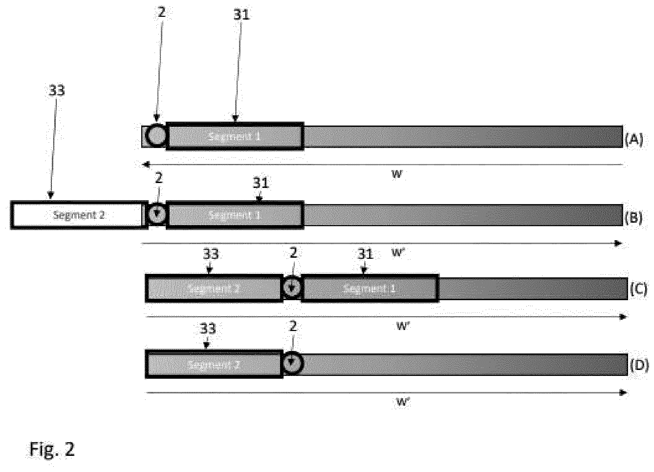

Furthermore, as shown in Fig. 2, when turning, i.e. approaching an end point of the weld seam in the welding direction W as shown in portion (A) of Fig. 2 and then continuing welding in the opposite welding direction W' as shown in portion (B) of Fig. 2, two or more opposite segments 33, 31 can be actuated. In this case, the control of both segments may overlap in time to provide optimum protection. When the opposite end point is in turn approached (Fig. 2 (C)) the leading heat is amplified by the absence of heat dissipation, the segment 31 in front of the torch 2 can also be switched on before the turning point is reached (Fig. 2 (D)).

The trailing nozzle device 1 according to the present invention can be used with all welding procedures that employ shielding of a weld seam with a shielding gas or benefit from such shielding, particularly MSG, TIG or plasma welding.

According to a further embodiment, the trailing nozzle body 3 can comprise cooling nozzles for discharging a cooling agent onto the workpiece in addition to the shielding gas.

Furthermore, the trailing nozzle body can comprise a suction ring to extract welding fumes.

Furthermore, the trailing nozzle body 3 can be configured to be modularly extended in diameter by mounting additional segment modules to the trailing nozzle body.

Advantageously, the present invention achieves an improved gas protection. Due to the adaptive control of the segments / subsegments, shielding gas merely flows to places that need to be protected. This in turn reduces the gas consumption which saves costs. Particularly, there is no need to work in an inert chamber, thus eliminating long purging times and improving accessibility.

## Claims

1. Trailing nozzle device (1) for a welding torch (2) for covering a weld pool or heated surface with a shielding gas, wherein the trailing nozzle device (1) comprises a trailing nozzle body (3) being configured to be mounted to the welding torch (2), wherein a shielding gas is ejectable onto a weld pool generated by the welding torch (2) via the trailing nozzle body (3),
wherein
the trailing nozzle body (3) comprises multiple segments (31, 32, 33, 34) extending side by side along an end section (2a) of the welding torch (2) in a circumferential direction of the trailing nozzle body (30) when the trailing nozzle body (3) is mounted to the welding torch (2), and wherein the trailing nozzle device (1) is designed to feed the segments (31, 32, 33, 34) with a shielding gas so that a flow rate of the shielding gas ejected through the respective segment (31, 32, 33, 34) can be controlled for each segment (31, 32, 33, 34) individually.

2. Trailing nozzle device according to claim 1, wherein the segments (31, 32, 33, 34) extend together around the end section (2a) of the welding torch (2) in the circumferential direction (30) when the trailing nozzle body (3) is mounted to the welding torch (2).

3. Trailing nozzle device according to claim 1 or 2, wherein the segments (31, 32, 33, 34) are separated from one another by walls (300) of the trailing nozzle body (3), each wall (300) extending along a radial direction (R) of the trailing nozzle body (3).

4. Trailing nozzle device according to one of the preceding claims, wherein each segment (31, 32, 33, 34) comprises a discharge opening (301), through which the shielding gas is ejectable onto a weld pool or a hot surface region of the workpiece, wherein the discharge openings (301) together define an annular discharge area that extends around said end section (2a) of the welding torch (2) when the trailing nozzle body (3) is mounted to the welding torch (2).

5. Trailing nozzle device according to one of the preceding claims, wherein the trailing nozzle device (1) comprises multiple valves (4), each valve allowing to adjust the flow rate of the shielding gas ejected through one of the segments (31, 32, 33, 34).

6. Trailing nozzle device according to one of the preceding claims, wherein each segment (31, 32, 33, 34) comprises a gas distributor (5) for distributing the shielding gas to be ejected into the respective segment (31, 32, 33, 34).

7. Trailing nozzle device according to one of the preceding claims, wherein the trailing nozzle device (1) is configured to cool the trailing nozzle body (3) by means of a circulating cooling agent fluid (6).

8. Trailing nozzle device according to claim 4 or according to one of the claims 5 to 7, insofar referring to claim 4, wherein the trailing nozzle device (1) comprises a gas-permeable cover element (7) for covering the discharge openings (301), wherein particularly the gas-permeable cover element (7) is a perforated plate or a metal mesh.

9. Trailing nozzle device according to claim 8, wherein the cover element (7) is releasably connected to the trailing nozzle body (3).

10. Trailing nozzle device according to claim 5 or according to one of the claims 6 to 9, insofar referring to claim 5, wherein the trailing nozzle device (1) is configured to control the valves (4) depending on a surface temperature of a work piece being welded, so that the shielding gas is ejected onto the melt pool and/or still hot surfaces regions of a work piece being welded.

11. Trailing nozzle device according to claim 10, wherein the temperature is measured by means of at least one temperature sensor (8) comprised by the trailing nozzle device (1).

12. Trailing nozzle device according to one of the preceding claims, wherein the respective segment (31, 32, 33, 34) is divided into subsegments (31a, 31b, 32a, 32b, 33a, 33b, 34a, 34b) in a radial direction (R) of the trailing nozzle body (3), wherein the trailing nozzle device (1) is designed to feed the subsegments (31a, 31b, 32a, 32b, 33a, 33b, 34a, 34b) with a shielding gas so that a flow rate of the shielding gas ejected through the respective subsegment can be controlled for each subsegment individually.

13. Trailing nozzle device according to claim 13, wherein the trailing nozzle device (1) comprises at least one first subsegment adjacent the welding torch (2) and at least one second subsegment further remote from the welding torch in the radial direction, and wherein the trailing gas nozzle device is configured to feed the at least one first subsegment with the shielding gas when the workpiece is still below a pre-defined threshold temperature and/or a length of a weld seam to be welded below a pre-defined threshold length, and/or wherein the trailing gas nozzle device is configured to also feed the at least one second subsegment with the shielding gas in addition, when the workpiece is above a pre-defined threshold temperature and/or a length of a weld seam to be welded is above a pre-defined threshold length.

14. A welding method using a trailing nozzle device according to one of the preceding claims, the method comprising the steps of:
- welding a weld seam and protecting the weld seam by ejecting a shielding gas onto a weld pool via the trailing nozzle body (3).
